# EUROPÄISCHE PATENTSCHRIFT

(11) **EP 0 244 721 B1**
(45) Veröffentlichungstag und Bekanntmachung des Hinweises auf die Patenterteilung: **30.06.1993**
(21) Anmeldenummer: 87106057.0
(22) Anmeldetag: 25.04.1987
(51) Int. Cl.: G01N 21/31

(54) **Verfahren und System zur optischen Transmissionsmessung**
Method and system for optical transmission measurement
Procédé et système pour mesurer la transmission optique

(30) Priorität: 06.05.1986 DE 3615260
(43) Veröffentlichungstag der Anmeldung: 11.11.1987
(73) Patentinhaber: Wolfgang Eichler KG, D-76327 Pfinztal (DE); Krieg, Gunther, Prof.Dr.Ing., D-76227 Karlsruhe (DE)
(72) Erfinder: Krieg, Gunther, Prof. Dr. Ing., D-7500 Karlsruhe 41 (DE)
(74) Vertreter: Dipl.-Ing. Heiner Lichti Dipl.-Phys. Dr.rer.nat. Jost Lempert Dipl.-Ing. Hartmut Lasch

(56) Entgegenhaltungen:
- EP-A- 0 020 801
- US-A- 4 525 069
- TECHNISCHES MESSEN, Band 51, Nr. 12, Dezember 1984, Seiten 421-426; W. BERKHAHN et al.: "Erprobung des SPECTRAN-Prozessphotometers zum Spurennachweis korrosiver Gase"
- PATENT ABSTRACTS OF JAPAN, Band 5, Nr. 177 (P-89)[849], 13. November 1981;& JP-A-56 106 148
- PATENT ABSTRACTS OF JAPAN, Band 4, Nr. 62 (P-10)[544], 9. Mai 1980, Seite 63 P 10;& JP-A-55 31 938

## Beschreibung

Die Erfindung betrifft ein Verfahren und ein System zur optischen Transmissionsmessung.

Die Ausnutzung optischer Strahlung zur Messung der Konzentrationen von Molekülverbindungen in optisch transparenten Gasen, Flüssigkeiten, Feststoffen und Folien unter Anwendung der Absorptionsspektroskopie, ist ein bekanntes Verfahren, das sowohl im Labor als auch in der Prozeßtechnik als auch bei Handanalysen eingesetzt wird.

Zum Stand der Technik zählen insbesondere Methoden, die auf dem Zweistrahl-Prinzip oder dem Wellenlängen-Bifrequenz-Verfahren oder der Gasfilter-Korrelationstechnik beruhen. Diese unterschiedlichen Prinzipien haben zum Ziel, Driften der Intensität der Strahlungsquelle, Verschmutzungen des optischen Strahlenganges, Driften der Empfindlichkeit des Detektors und sonstige Störeinflüsse zu kompensieren. Auf Grund der hohen Anforderungen der modernen Technik an die Meßgenauigkeit haben die oben genannten Grundprinzipien zu sehr aufwendigen und für viele Anwendungsfälle zu kostspieligen Systemen geführt. Darüberhinaus ist es für viele praktische Anwendungsfälle bisher nicht gelungen, die hohen Anforderungen an die Meßgenauigkeit, Langzeitstabilität, Temperaturempfindlichkeit der Meßwerte zu erfüllen Als Beispiele seien die zahlreichen ungelösten MAK (= maximale Arbeitsplatz Konzentration)-Meßprobleme im sub-ppm-Bereich im Rahmen der Arbeitsplatzkontrolle gemäß den gesetzlichen Vorschriften genannt.

Aus der DE-PS 31 37 658 ist eine aufwendige Vorrichtung nach dem Bifrequenzverfahren bzw. dem Gasfilter-Korrelationsprinzip zur Messung der Konzentration eines Gases in einer Gasmatrix oder einer in einem Lösungsmittel gelösten Molekülverbindung bekannt. Die am Detektor auftretenden Signale werden in einem kostspieligen Fourier-Analysator bezüglich der einfachen und der doppelten Chopperfrequenz analysiert und in einer nachfolgenden Signalverarbeitung bestehend aus Dividierer und/oder automatischer Verstärkungsfaktor-Anpassung des Signalverstärkers weiterverarbeitet. Ein ganz wesentlicher Nachteil des Systems besteht darin, daß bei Schwankungen der Intensität der Lichtquelle bzw. der optischen Transmission des Strahlenganges unvermeidliche Nichtlinearitäten des Detektors und der sich anschließenden Signalverarbeitung zu Meßfehlern führen. Außerdem werden hohe Anforderungen an den Dynamik-Bereich der Signalverarbeitung gestellt, da auch bei merklichem Rückgang der Strahlungsintensität der Quelle, welche sich beim Durchgang durch die Meßzelle infolge des Beer'schen Gesetzes exponentiell verstärkt, der ursprünglich eingestellte Referenzwert am Ausgang des Verstärkersystems realisert werden muß.

Die JP-A-55 31 938 befaßt sich mit der Vergleichsmessung relativ kurzzeitiger Lichtflüsse, wobei zu einem Zeitpunkt, zu dem die Strahlungsenergie einer ersten Strahlung einen vorgegebenen Wert erreicht, die Erfassung der Strahlungsenergie einer zweiten Strahlung beendet wird.

Die JP-A-56 106 143 mißt organische Verbindungen in Wasser, indem der Lichtstrahl einer Gasentladungslampe durch halbdurchlässige Spiegel aufgeteilt wird, wobei ein Teilstrahl durch die Probe hindurch, der andere an dieser vorbei durch die Detektoren empfangen wird. Die Teilstrahlen werden weiterhin, der durch die Zelle hindurchgehende Strahl nach dieser in jeweils weitere zwei Teilstrahlen aufgespalten und durchlaufen Bandpaßfilter derart, daß einer der Teilstrahlen ultraviolettes Licht beinhaltet, der andere sichtbares Licht.

Der Erfindung liegt daher die Aufgabe zugrunde, ein Verfahren zu entwickeln, das die Systemkosten gegenüber Systemen gemäß dem Stand der Technik um einen Faktor 2 bis 4 reduziert und gleichzeitig eine ganz wesentliche Verbesserung der Meßgenauigkeit, der Langzeitstabilität und der Abhängigkeit des Meßwertes von Temperaturschwankungen der Umgebung und des Meßmediums bewirkt.

Die Aufgabe wird erfindungsgemäß durch die Merkmale der Ansprüche 1 bzw. 16 gelöst.

Erfindungsgemäß werden die Intensitäten der zur Messung herangezogenen Strahlungsquellen durch eine Regelung getrennt auf jeweils konstanten Sollwerten gehalten. Dadurch kann die nachfolgende Signalverarbeitung für einen sehr engen Dynamikbereich ausgelegt werden, was zu erheblichen Kosteneinsparungen führt.

Ein ganz wesentlicher Vorteil der Erfindung ist, daß jegliche Quotientenbildung von Meß- und Referenzsignal sowie die automatische Verstärkungsfaktor-Anpassung entfallen können. Demgegenüber ist lediglich ein sehr einfacher und preisgünstiger Zählerbaustein erforderlich. Diese Vereinfachung wird in bevorzugter Weise dadurch erreicht, daß das Signal des Kanals der Referenzwellenlänge über einen Spannungs-Frequenz-Wandler auf einen Zähler mit festem Zeittakt und festem Zähler-Endwert gegeben wird. In derselben Weise wird das Signal des Meßkanals auf einen zweiten, identischen Zähler geführt. Indem der Zähler des Bezugskanals während einer Meßperiode jeweils bis zu seinem Endwert läuft und je nach der optischen Transmission des Strahlenganges mehr oder weniger lange Zeiten dafür benötigt, liefert er die Zeitbasis für den Meßwertkanal, dessen Zähler die Werte des Meßsignals jeweils so lange erfaßt, wie der Zähler des Referenzkanals zum Erreichen seines Endwerts benötigt. Dadurch entfällt neben der Verstärkungsfaktor-Anpassung insbesondere auch die sonst bei Systemen gemäß dem Stand der Technik erforderliche aufwendige Quotientenbildung.

Durch bevorzugte Speicherung der Meßwerte bzw. der zugehörigen Konzentrationswerte in einem nicht-flüchtigen Speicher können die Auswertung nach dem Beer'schen Gesetz, d.h. eine Logarithmierung, sowie eine anschließend erforderliche Linearisierung und eine Eichfaktoranpassung vollständig entfallen. Insbesondere wird trotz der präzisen Meßsignalerfassung kein Mikroprozessor oder sonstiger Rechner benötigt. Außerdem entfällt eine Umrechnung der bei Systemen gemäß dem Stand der Technik anfallenden Extinktionswerte auf die letztlich interessierenden Konzentrationswerte durch einen sogenannten Konzentrationsrechner. Dabei ist es möglich, mehrere, z.B. 16 Eichkurven in dem nicht flüchtigen Speicher abzulegen. Bei dem Verfahren und der Erfindung handelt es sich insbesondere um ein Vier-Strahl-Dual-Wellenlängen-Verfahren, welches die Intensitäten von mindestens zwei gepulsten Strahlungsquellen unterschiedlicher Wellenlängen-Emissions-Bereiche sowohl vor als auch nach ihrem Durchlauf durch die Meßzelle laufend erfaßt und zur Strahlungsintensitäts-Regelung bzw. zur Meßwertverarbeitung heranzieht.

Ein weiterer erfindungsgemäßer Vorteil des Verfahrens beruht darauf, daß mechanisch bewegte Teile, insbesondere Chopper und Chopper-Antriebe, entfallen, so daß die damit verbundenen Stabilitäts- und Standzeitprobleme sowie die zugehörigen Zusatzkosten nicht entstehen.

Weitere Vorteile und Merkmale des Verfahrens ergeben sich aus den Ansprüchen und aus der nachfolgenden Beschreibung, in der Ausführungsbeispiele der Erfindung unter Bezugnahme auf die Zeichnungen im einzelnen erläutert sind. Dabei zeigen:
- Figur 1a: ein Blockschaltbild einer optoelektronischen Anordnung des erfindungsgemäßen Verfahrens;
- Figur 1b: ein Blockschaltbild einer speziellen Verstärkerkette zur Realisierung des Verfahrens;
- Figur 2: ein Zeitablaufdiagramm der Strahlerzeugung, Intensitätsregelung der Strahlungsquellen sowie der elektronischen Signalauswertung.
- Figur 3a: eine optomechanische Anordnung des erfindunsgemäßen Systems für den Einsatz in der Prozeßtechnik;
- Figur 3b: eine Fig. 3a entsprechende Anordnung zur Realisierung der Erfindung in einem Handgerät für manuelle Analysen;
- Figur 4: Anordnung und Intensitätsdiagramm zu zwei elektronisch gepulsten Strahlungsquellen für den Einsatz im nahen und fernen Infrarot-Bereich; und
- Figur 5: Darstellungen zu einer lamellenförmig aufgebauten Strahlungsquelle mit großer Oberfläche.

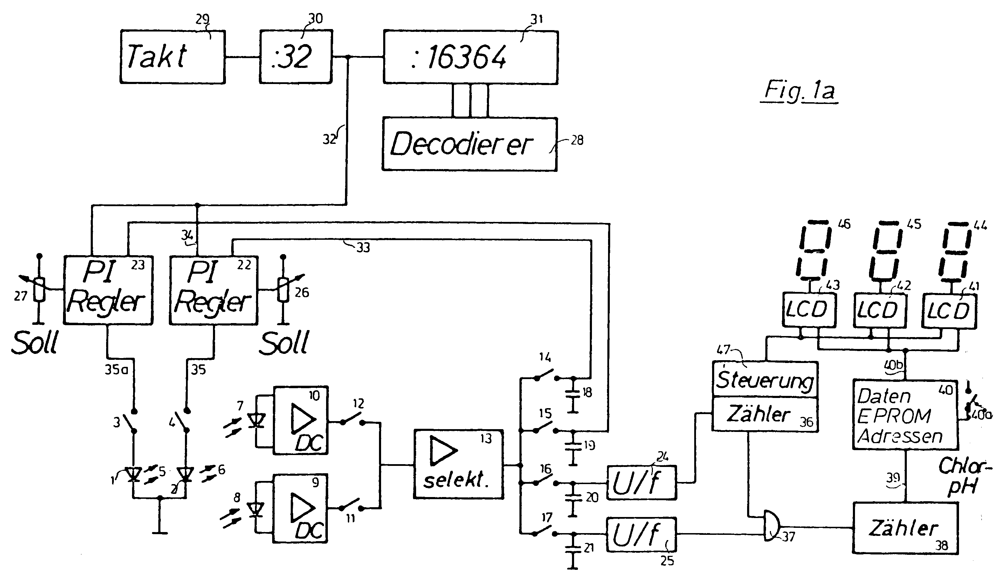

Fig. 1a zeigt die Strahlungsquellen 1, 2, die über zwei Schalter 3, 4 alternierend elektronisch getaktet werden. Die Strahlungsquelle 1 zur Erzeugung der Meßwellenlänge 5 emittiert Licht in einem Wellenlängenbereich, der von der zu bestimmenden Molekülverbindung absorbiert wird, wohingegen die Referenz-Strahlungsquelle 2 in einem Wellenlängenbereich 6 Strahlung aussendet, welche weder von der zu bestimmenden Molekülverbindung noch von anderen im Verfahrensmedium enthaltenen Komponenten geschwächt wird. Die so erzeugten Strahlungsimpulse 5, 6 unterschiedlicher Wellenlänge werden sowohl vor Durchlaufen der optischen Absorptionszelle durch einen Bezugsdetektor 7 als auch nach dem Durchgang der Strahlung durch die Zelle von einem Meßdetektor 8 detektiert. Als Detektoren 7,8 kommen Halbleiter-Detektoren als pn-Übergänge, z.B. Photoelemente, Photodioden oder Halbleiter-Photowiderstände aus den Materialien Silizium, Bleisulfid, Bleiselenid, Germanium etc. in Betracht. Für den infrarot- und den fernen-infrarot-Bereich werden vorzugsweise pyroelektrische Detektoren oder Thermosäulen in integrierter Technik eingesetzt.

Die Detektorsignale der Detektoren 7, 8 werden von den Gleichspannungs-Verstärkern 9, 10 verstärkt und gelangen über die Schalter 11, 12 abwechselnd auf einen selektiven Verstärkermodul 13. Die am Ausgang des Verstärkers 13 zeitlich nacheinander anliegenden vier Signale werden über vier Schalter 14, 15, 16, 17 sowie die Sample/Hold-Glieder 18, 19, 20, 21 an die Regelungseinheiten 22, 23 der Referenz- und Meßstrahlungsquellen 1, 2 bzw. an die Spannungs-Frequenz-Wandler 24, 25 weitergeleitet. Bei den Regelungseinheiten 22, 23 handelt es sich um Proportional-Integral-Regler, die über die Einstellpotentiometer 26, 27 auf den jeweils gewünschten Sollwert der Strahlungsintensitäten der Quellen 1, 2 gebracht werden.

Die Schalter 3, 4, 11, 12, 14, 15, 16, 17 werden über den Decodierer 28 gesteuert, der von einem Taktgeber 29, z.B. mit der Taktfrequenz 32768 Hertz, über einen Teiler 30, z.B. mit dem Faktor 1:32, und einem weiteren Teiler 31, z.B. mit dem Faktor 1:16384, getaktet wird, so daß sich ein Meßzyklus mit Periodendauern im Sekunden-Bereich ergibt. Das hinter dem Teiler 30 vorliegende Taktsignal 32, z.B. mit der Frequenz 1024 Hertz, legt die Sample/Hold-Werte 18, 19 simultan an die Eingänge 33, 34 der P-I-Regler 22, 23, deren Ausgänge die geregelten Versorgungsströme bzw. Versorgungsspannungen 35, 35a der Strahlungsquellen 1, 2 bereitstellen, so daß zeitlich konstante Strahlungsintensitäten resultieren.

Das am Sample/Hold-Glied 20 anliegende Referenzsignal der Referenzwellenlänge 6 der Strahlungsquelle 2 des Meßdetektors 8 wird erfindungsgemäß einem ersten Spannungs-Frequenz-Wandler 24 zugeführt, dessen Ausgangs-Frequenzsignal einem Zähler 36 so lange aufgegeben wird, bis dieser seinen Endwert, z.B. 256 oder 1024, erreicht hat. Dieser Vorgang dauert, je nach Größe des Referenzsignales 10, d.h. je nach Verschmutzungsgrad der optischen Meßstrecke, mehr oder weniger lang. Das davon abgeleitete Zeitintervall, das je nach Verschmutzungsgrad zeitlich schwankt, wird über ein Und-Glied 37 dazu herangezogen, um die Meßsignale 21 am Ausgang des Spannungs-Frequenz-Wandlers 25 einem Zähler 38 zuzuführen und zu summieren. Durch die erfindungsgemäße Bildung einer von der optischen Transmission der optischen Gesamtanordnung abhängigen Dauer eines variablen Zeitintervalles durch den Zähler 36, wobei das Zeitintervall umgekehrt proportional zu der aktuellen Transmission der optischen Gesamtanordnung ist, wird in Verbindung mit dem Zähler 38 auf einfachste Weise ein Meßwert 39 mit hoher Genauigkeit bei vernachlässigbaren Kosten gebildet, der dem Quotienten aus dem Meßsignal 21 und dem Referenzsignal 20 entspricht. Das aktuelle Meßsignal 39 wird über einen nicht-flüchtigen Speicher 40, z.B. ein EPROM, der die Eichkurven von z.B. 16 zu untersuchenden Stoffen in der Meßküvette, d.h. die Zuordnung zwischen Meßwert und Konzentration der jeweils interessierenden Molekülverbindung, in Tabellenform enthält, in das interessierende Konzentrationssignal umgerechnet und über Treiberstufen 41, 42, 43 an eine Sieben-Segment-Anzeige 44, 45, 46 weitergeleitet, welche über einen Steuerausgang 47 des Zählers 36 getaktet wird. Die so erzielte erfindungsgemäße Gesamtanordnung hat den weiteren Vorteil, daß eine große Energieersparnis gegenüber konventionellen Systemen gemäß dem Stand der Technik erreicht wird und ein Dauerbetrieb über eine Miniaturbatterie von mehreren Monaten möglich ist.

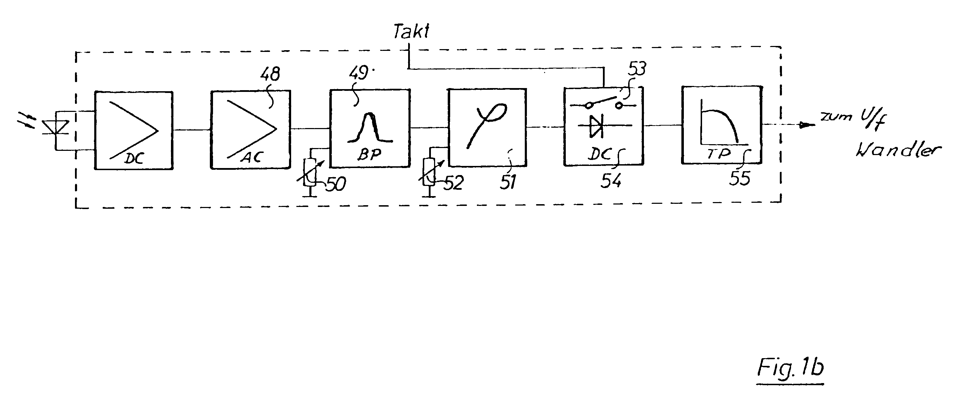

Fig. 1b zeigt das detaillierte Blockschaltbild des selektiven Verstärkersystems 13 (Fig. 1a). Die von den Gleichspannungsverstärkern 9, 10 (Fig. 1a) verstärkten Signale gelangen über einen Wechselspannungsverstärker 48 an einen Schmalbandverstärker 49, dessen Mittenfrequenz über ein Potentiometer 50 einstellbar ist. Erfindungsgemäß werden die Lichtquellen 1, 2 (Fig. 1a) nicht nur gemäß Fig. 1a im Sekunden-Bereich alternierend ein- und ausgeschaltet, sondern vielmehr während des strahlenden Betriebes zusätzlich mit einer Frequenz im Kilohertz-Bereich moduliert, d.h. schnell ein- und ausgeschaltet, so daß eine elektronische Filterung bei dieser Frequenz zu einer entscheidenden Verbesserung des Signal/Rausch-Verhältnisses führt. Dementsprechend wird die Mittenfrequenz des Schmalbandverstärkers 49 identisch zu der Modulationsfrequenz der Lichtquellen, z.B. auf 1024 Hertz, eingestellt. Die Ausgangssignale des Schmalbandverstärkers gelangen über einen Phasenschieber 51 mit über das Potentiometer 52 einstellbarer Phasenverschiebung auf einen mit Hilfe des Schalters 53 getakteten Synchrongleichrichter 54, der die negativen Halbwellen der vom Verstärkersystem durchgelassenen Sinusschwingung in positive Halbwellen transformiert. Die resultierende pulsierende Gleichspannung wird über einen Tiefpaß 55 an den jeweiligen Spannungs-Frequenz-Wandler 24, 25 (Fig. 1a) gegeben. Durch diese erfindungsgemäße Anordnung wird eine extreme Rauschunterdrückung sowie eine Unempfindlichkeit der Gesamtanordnung gegenüber Fremdlicht, bei geringem Kostenaufwand erzielt.

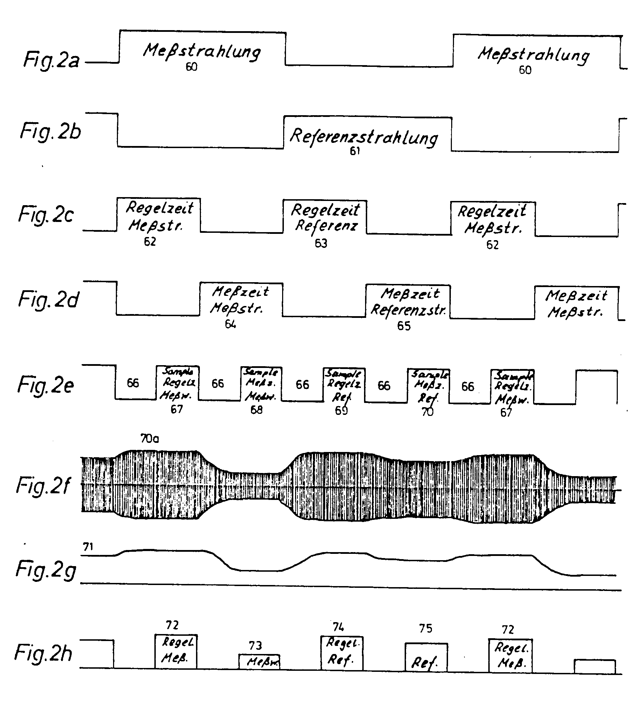

Fig. 2 zeigt das Zeitablaufdiagramm einer Ausführung des erfindungsgemäßen Verfahrens über zwei Gesamtperioden des Meßvorganges. In Fig. 2a sind die Strahlungsimpulse 60 der Meßstrahlungsquelle 1 (Fig. 1a) bei Wiederholfrequenzen von einigen Hertz wiedergegeben, die ihrerseits mit einer wesentlich höheren Frequenz im Kilohertz-Bereich moduliert sind. Fig. 2b zeigt die entsprechende, gegenüber Fig. 2a phasenverschobene Taktung 61 der Referenzstrahlungsquelle 2 (Fig. 1a). In Figur 2c sind die Regelintervalle 62, 63 der P-I-Regler 22, 23 (Fig. 1a) angegeben und zwar die Regelzeit 62 für die Strahlungsquelle 1 (Fig. 1a) zur Erzeugung der Meßwellenlänge 5 sowie die Regelzeit 63 für die Referenzstrahlungsquelle 2 zur Erzeugung der Referenzwellenlänge 6. Aus Fig. 2d ist ersichtlich, daß außerhalb der Regelzeiten noch verfügbare Zeitintervalle für Messungen am Meßdetektor 8 genutzt werden. Im Zeitintervall 64 wird die Messung der Intensität der Strahlung mit der Meßwellenlänge, im Intervall 65 die Messung der Intensität der Strahlung mit der Referenzwellenlänge jeweils unter Einsatz des Detektors 8 (Fig. 1a), d.h. nach Durchgang der jeweiligen Strahlung durch die Meßzelle, durchgeführt. Die Ansteuerung der Sample/Hold-Glieder erfolgt in der zweiten Hälfte des jeweiligen Meßintervalls gemäß Figur 2e. Durch die Pausenzeit 66 wird erreicht, daß das Einschwingen der Verstärker keinen Einfluß auf das Meßsignal hat. Und zwar wird im Zeitintervall 67 der Sample/Hold-Wert der Meßwellenlänge am Bezugsdetektor 7 (Fig. 1a) für die Regelung 23 des Referenzstrahlers 2 gebildet. Im Zeitintervall 68 wird der Meßwert der Meßwellenlänge am Meßdetektor 8 (Fig. 1a) für die Absorptionsmessung übernommen. Im Zeitintervall 69 wird der Meßwert am Bezugsdetektor 7 (Fig. 1a) für die Regelung 22 der Referenzstrahlungsquelle 2 (Fig. 1a) gebildet und schließlich wird während des Zeitintervalles 70 der Meßwert der Referenzwellenlänge am Meßdetektor 8 (Fig. 1a) in den zugehörigen Sample/Hold-Speicher 10 aufgenommen. Fig. 2f zeigt die entsprechenden Ausgangssignale 70a hinter dem selektiven Verstärkersystem am Ausgang des Schmalbandverstärkers 49 (Fig. 1b) und Fig. 2g zeigt schematisch das resultierende Signal 71 nach Durchlaufen des Tiefpasses 55 (Fig. 1b) der erfindungsgemäßen Schaltung. In Fig. 2h sind die zugeordneten Ergebniswerte an den Sample/Hold-Gliedern 18 bis 21 (Fig. 1a) dargestellt. Der Wert 72 entspricht der Regelspannung für die Intensität der Strahlungsquelle 1 (Fig. 1a), d.h. der Meßwellenlänge, am Referenzdetektor 7 (Fig. 1a). Der Wert 73 stellt den Meßwert der Meßwellenlänge nach Durchgang durch die Meßzelle am Detektor 8 (Fig. 1a) dar. Der Wert 74 entspricht der Regelspannung für die Intensität der Strahlungsquelle 2 am Bezugsdetektor 7 zur Erzeugung der Strahlung der Referenzwellenlänge. Der Meßwert 75 ist schließlich das Meßergebnis am Detektor 8 nach Durchgang der Referenzwellenlängenstrahlung durch die Absorptionszelle der Anordnung.

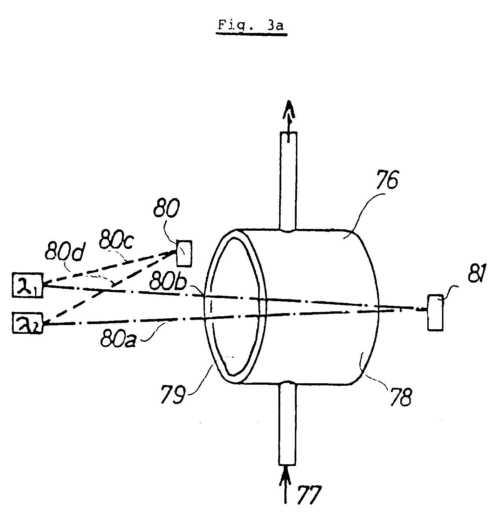

Fig. 3a zeigt die optomechanische Anordnung für den Einsatz in der Prozeßtechnik, z.B. bei der kontinuierlichen Messung von Methanol in Natronlauge bei der Papierfabrikation. Die Meßzelle 76 wird vom Prozeßmedium 77 in Pfeilrichtung durchströmt und ist über optisch transparente und vakuumdichte Fenster 78, 79 an den Stirnflächen abgeschlossen. Die Intensität der jeweiligen Strahlung vor dem Durchgang durch die Meßzelle 76 wird von einem Referenzdetektor 80, die Strahlung nach Durchgang durch die Meßzelle 76 von einem Meßdetektor 81 erfaßt.

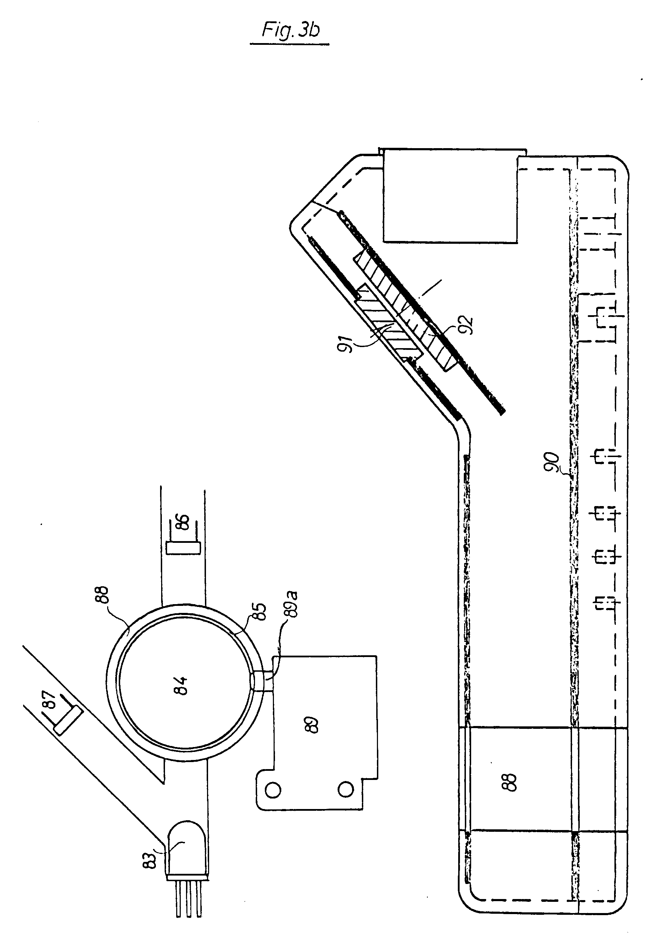

Fig. 3b zeigt eine weitere Ausbildung der Erfindung als Handgerät, z.B. für die photometrische Bestimmung des Chlor-Gehaltes oder des pH-Wertes von Schwimmbadwasser. Das von einer monolithisch aufgebauten Doppel-Halbleiter-Leuchtdiode 83, welche abwechselnd grüne Meßstrahlung und rote Referenzstrahlung erzeugt, ausgesandte sichtbare Licht wird sowohl hinter einer Wasserprobe 84, die sich im Reagenzglas 85 befindet, durch einen Meßdetektor 86 als auch von einem Referenzdetektor 87 detektiert. Der Referenzdetektor befindet sich dabei seitlich vor der Probe 84. Beim Einführen der Reagenzglas-Wasserprobe 84 in den Untersuchungsschacht 88 der erfindungsgemäßen Anordnung wird das elektronische Gesamtsystem (Fig. 1a) über den Schalter 89 automatisch in den Betriebszustand versetzt und bei Herausnahme der Probe wieder ausgeschaltet. Die elektronische Signalverarbeitung befindet sich auf der Leiterplatte 90. Die Anzeigeeinheit 91 mit zugehöriger elektronischer Ansteuerung 92 befindet sich unterhalb des schräggestellten Sichtteils des Gehäuses der Gesamtanordnung.

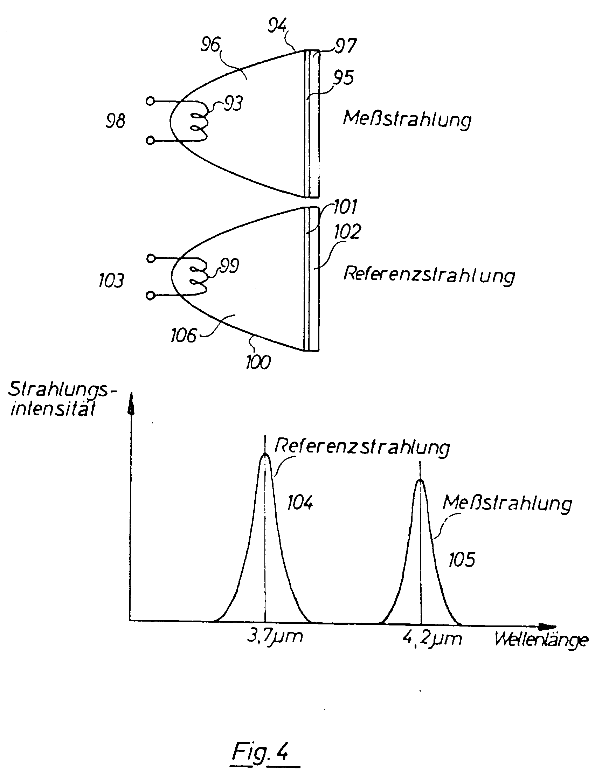

Fig. 4 zeigt eine elektronisch gepulste Strahlungsquelle zur Realisierung des erfindungsgemäßen Verfahrens im Infrarotbereich. Eine dünne Wendel 93, 99, z.B. aus Wolframdraht, wird über die Spannungsquellen 98, 103 im Bereich einiger hundert Hertz bis einige tausend Hertz gepulst und erzeugt Strahlungsimpulse im sichtbaren-, nahen- und fernen-Infrarotbereich. Der jeweils zur Lösung einer bestimmten Problemstellung gewünschte Wellenlängen-Bereich, d.h. die Wellenlänge 104 für die Referenzstrahlung bzw. die Wellenlänge 105 für die Meßstrahlung wird durch ein optisches Vielschicht-Interferenzfilter 97, 102 ausgeblendet. Die parabelförmigen Reflektoren 94, 100 sowie die optisch transparenten Fenster 95, 101 bilden vakuumdicht abgeschlossene Einheiten. Der jeweilige Hohlraum 96, 106 ist mit Schutzgas, z.B. mit Argon oder Krypton, bei Unterdruck geflutet. In einer speziellen Ausbildung können die Fenster 95, 101 direkt mit der jeweiligen optischen Schicht 97, 102 vergütet werden. Als optische Fenster werden Einkristalle der Materialien ZnSe, CaF₂, AgCl, KCl, NaCl, BaF₂ bevorzugt eingesetzt. Die in Fig. 4 durch die beiden Strahlungsquellen realisierten Emissionswellenlängen bei 3,7 Mikrometer (Referenzwellenlänge) und 4,2 Mikrometer (Meßwellenlänge) können z.B. für die CO₂-Gasanalyse im Rauchgas von mit fossilen Brennstoffen befeuerten Kraftwerken eingesetzt werden.

Zur Realisierung der Erfindung im sichtbaren- und im nahen-infrarot-Bereich werden vorzugsweise Halbleiter-Leuchtdioden oder Halbleiter-Laserdioden eingesetzt. Dabei werden insbesondere monolithisch aufgebaute Doppel-Leuchtdioden-Systeme bevorzugt. Im ultravioletten Spektralbereich wird das erfindungsgemäße Verfahren durch Gasentladungslampen, z.B. mit Deuterium-, Quecksilber- oder Xenon-Gasfüllung realisiert. Für das langwellige Ultraviolett oberhalb 270 Nanometer werden diese Lampen vorzugsweise mit Leuchtstoffbeschichtung eingesetzt.

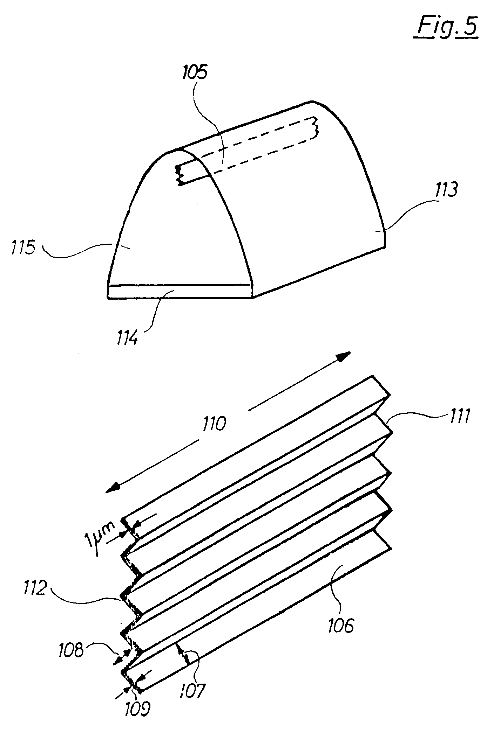

Figur 5 zeigt eine erfindungsgemäße getaktete Strahlungsquelle für den infrarot- und den nahen-infrarot-Bereich. Sie besteht aus einem lamellenförmigen Strahler, dessen Dimensionen, d.h. Dicke 109, Lamellenbreite 107, 108, im Mikrometer-Bereich bzw. sub-Mikrometer-Bereich liegen, während die Strahlerlänge 110 Dimensionen im Millimeter- oder Centimeter-Bereich aufweist. Der große Vorteil dieser Strahlungsquelle besteht darin, daß bei kleinen äußeren Abmessungen eine vergleichsweise extrem hohe Oberfläche erzielt wird und die emittierte Strahlungsintensität entsprechend hoch ist. An den Stirnflächen 112, 111 werden leistenförmige Metallkontakte zur Stromzufuhr angebracht. Wegen der extrem geringen Dicke der Lamellenstrukturen 109 werden selbst bei niedrigen Stromimpulsen hohe Temperaturerhöhungen der Struktur erzielt. Da die emittierte Strahlungsleistung proportional zur vierten Potenz der absoluten Temperatur ansteigt, wird mit geringem Energieaufwand eine hohe Strahlungsleistung abgegeben. Die lamellenförmige Längsstruktur 106 wird erfindungsgemäß in einen Hohlspiegel mit parabelförmigem Querschnitt entlang der Brennlinie 105 eingebracht. Die Stirnflächen 115 werden durch reflektierende Teile abgeschlossen. Ein optisches Fenster schließt die Anordnung vakuumdicht ab. Der Innenraum ist mit einem Edelgas bei Unterdruck geflutet. Die lamellenförmige Struktur 106 wird vorzugsweise unter Einsatz der Röntgen-Tiefenlithografie hergestellt. Als Material wird vorzugsweise Nickel verwendet, da der hohe spezifische Widerstand eine effektive Aufheitung bei kleinen Strömen ermöglicht.

In einer weiteren Ausbildung der in Figur 5 gezeigten Anordnung wird der lamellenförmige Flächenstrahler 106 als ebener Strahler mit äußeren Abmessungen im Millimeter-Bereich eingesetzt. Die Parallelisierung bzw. Fokussierung der Strahlung erfolgt in diesem Fall durch einen Parabolspiegel, in dessen Brennpunkt bzw. in dessen Nähe der Flächenstrahler sich befindet.

## Patentansprüche

1. Verfahren zur optischen Transmissionsmessung, insbesondere im Hinblick auf die Konzentrationsbestimmung optisch absorbierender Molekülverbindungen in Gasen und Flüssigkeiten und Folien, wobei Strahlung im ultravioletten-, sichtbaren-, naheinfrarot- und infrarot-Bereich eingesetzt wird und die Flüssigkeit und/oder das Gas eine optische Zelle (76) durchströmen oder in der Zelle enthalten sind, wobei mindestens zwei elektronisch getaktete Strahlungsquellen (1, 2) unterschiedlicher Emissionswellenlängenbereiche (5, 6) jeweils zwei Teilstrahlen erzeugen, wobei das eine Teilstrahlenpaar unterschiedlicher Wellenlängen phasenverschoben getaktet die optische Zelle durchläuft und auf einen ersten Detektor (8), den Meßdetektor, trifft und das andere Teilstrahlenpaar unterschiedlicher Wellenlängen phasenverschoben getaktet unter Umgehung der Zelle (76) auf einen Zweiten Detektor, den Bezugsdetektor (7) auftrifft, wobei der von der einen Strahlungsquelle (1) emittierte Wellenlängenbereich, die sogenannten Meßstrahlung (5), von der zu bestimmenden Molekülverbindung absorbiert wird, während der von der anderen Strahlungsquelle (2) emittierte Wellenlängenbereich, die sogenannte Referenzstrahlung (6), von dem zu untersuchenden Medium nicht geschwächt wird, wobei die am Bezugsdetektor (7) detektierten Signale des jeweiligen Emissionswellenlängenbereichs (5, 6) die Strahlungsintensität der zugehörigen Strahlungsquelle (1, 2) auf einen konstanten Wert regelt; daß das Meßsignal der Referenzstrahlung (6) am Meßdetektor (8) über eine solche Meßzeit integriert wird, bis ein fest vorgebbarer Wert des Integrals erreicht ist und daß das Meßsignal der Meßstrahlung (5) am Meßdetektor (8) über die gleiche Meßzeit integriert wird und das zum Ende dieser Meßzeit erreichte Integral des Meßwerts der Meßstrahlung (5) am Meßdetektor (8) als Meßergebnis herangezogen wird.

2. Verfahren nach Anspruch 1, dadurch gekennzeichnet, daß das Meßergebnis über mindestens eine in einem nicht-flüchtigen Speicher (40) abgelegte doppelspaltige Tabelle dem jeweiligen Konzentrationswert der Molekülverbindung zugeordnet wird und daß die eine Spalte der Tabelle ausgewählte Meßwerte und die andere Spalte die zugeordneten Konzentrationswerte enthält.

3. Verfahren nach Anspruch 2, dadurch gekennzeichnet, daß mehrere doppelspaltige Tabellen, die verschiedenen Molekülverbindungen zugeordnet sind, im nicht-flüchtigen Speicher abgelegt werden.

4. Verfahren nach Anspruch 2 oder 3, dadurch gekennzeichnet, daß der jeweilige Meßwert dem nächstliegenden Tabellenwert zugeordnet wird.

5. Verfahren nach einem der vorangehenden Ansprüche, dadurch gekennzeichnet, daß die Meßsignale der vier Teilstrahlen am Meßdetektor (8) und am Bezugsdetektor (7) phasenverschoben getaktet ein einziges selektives Verstärkersystem (13) durchlaufen und daß die Signale des Bezugsdetektors (7) direkt den Regelsystemen (22, 23) der Strahlungsquellen (1, 2) und die Signale des Meßdetektors (8) direkt dem Integrator (38) des Meßsignals (5) des Meßdetektors (8) bzw. direkt dem Integrator (36) des Referenzsignales (6) des Meßdetektors (8) zugeführt werden.

6. Verfahren nach einem der vorangehenden Ansprüche, dadurch gekennzeichnet, daß die Meßsignale der Teilstrahlen, insbesondere nach Durchlaufen des selektiven Verstärkersystems (13), zwischengespeichert werden.

7. Verfahren nach einem der Ansprüche 2 bis 6, dadurch gekennzeichnet, daß die Strahlungsimpulse der Meßstrahlung (5) und die Strahlungsimpulse der Referenzstrahlung (6) in jeweils zwei Teilintervalle, den Regelintervallen (62, 63) und den Meßintervallen (64, 65), unterteilt werden und daß das eine Teilintervall (62, 63) zur Regelung der Strahlungsquellen (1, 2) und das andere Teilintervall (64, 65) zur Ermittlung der Meßsignale der Referenzstrahlung (6) und der Meßsignale der Meßstrahlung (5) herangezogen werden.

8. Verfahren nach einem der vorangehenden Ansprüche, dadurch gekennzeichnet, daß Regel- und Meß-Intervalle (62-64) jeweils in zwei weitere Teilintervalle (66, 67; 66, 68; 66, 69; 66, 70) unterteilt werden, wobei das erste Teilintervall (66) zur Abwicklung des Einschwingvorganges und das zweite Teilintervall (67-70) zur Durchführung des Regel- bzw. Meßvorganges herangezogen werden.

9. Verfahren nach einem der vorangehenden Ansprüche, dadurch gekennzeichnet, daß die Strahlungsimpulse sowohl des Meßstrahles (5) als auch des Referenzstrahles (6) während der Strahlungsphasen hochfrequent moduliert werden und die Taktung der Strahlungsquellen (1, 2) vom strahlenden zum nicht-strahlenden Zwischenzustand vergleichsweise niederfrequent erfolgt.

10. Verfahren nach Anspruch 9, dadurch gekennzeichnet, daß die Modulation der Strahlungsimpulse durch hochfrequentes Ein- und Ausschalten der Strahlungsquellen (1, 2) während der Strahlungsphasen erfolgt.

11. Verfahren nach Anspruch 9 oder 10, dadurch gekennzeichnet, daß die Mittenfrequenz des selektiven Verstärkersystems (13) mit der Modulationsfrequenz der Strahlungsquellen (1, 2) übereinstimmt.

12. Verfahren nach einem der vorangehenden Ansprüche, dadurch gekennzeichnet, daß eine mobile Zelle (76 - Küvette) eingesetzt wird, die nach Einbringen in den Strahlengang eine automatische Inbetriebnahme des Systems bewirkt und nach Herausnahme die automatische Abschaltung der Energieversorgung auslöst.

13. Verfahren nach einem der vorangehenden Ansprüche, dadurch gekennzeichnet, daß als Strahlungsquelle fächerartige Strukturen (106) aus elektrisch leitendem Material mit großer Oberfläche bei gleichzeitig kleinem Volumen und extrem geringer Materialdicke verwendet werden.

14. Verfahren nach Anspruch 13, dadurch gekennzeichnet, daß die fächerartigen Strukturen (106) Feinstrukturen im Mikrometer- bzw. Sub-Mikrometer-Bereich aufweisen.

15. Verfahren nach einem der vorangehenden Ansprüche, dadurch gekennzeichnet, daß die von den gepulsten Strahlungsquellen (1, 2) emittierte Strahlung optisch gefiltert wird.

16. System zur optischen Transmissionsmessung, insbesondere im Hinblick auf die Konzentrationsbestimmung optisch absorbierender Molekülverbindungen in Gasen, Flüssigkeiten und Folien, wobei Strahlung im ultravioletten-, sichtbaren, nahen-infrarot- und infrarot-Bereich eingesetzt wird und die Flüssigkeit und/oder das Gas eine optische Zelle (76) durchströmen oder in der Zelle enthalten sind, wobei mindestens zwei elektronisch getaktete Strahlungsquellen (1, 2, 83, 99, 93) unterschiedlicher Emissionswellenlängenbereiche (5, 6) jeweils zwei Teilstrahlen erzeugen, wobei das eine Teilstrahlenpaar (80a, 80b) unterschiedlicher Wellenlängen (τ1,τ2) phasenverschoben getaktet die Zelle (76) durchläuft und auf einen ersten Detektor (8, 81, 86), den Meßdetektor, trifft und das andere Teilstrahlenpaar (80c, 80d) unterschiedlicher Wellenlängen phasenverschoben getaktet auf einen zweiten Detektor (7, 80, 87), den Bezugsdetektor, unter Umgehung der Zelle (76, 84), auftrifft, wobei die Wellenlänge der Meßstrahlung (5) von interessierenden Molekülverbindungen relativ absorbierbar ist, während die Wellenlänge der Referenzstrahlung (6) außerhalb jedes selektiven Absorptionsbereichs der interessierenden Molekülverbindungen liegt, wobei eine Einrichtung (22, 23) zur Regelung der Strahlungsintensität der entsprechenden Strahlungsquelle (1, 2) aufgrund der am Bezugsdetektor (7) (7, 80, 87) detektierten Signale des jeweiligen Emissionswellenlängenbereichs, eine Einrichtung (36, 47) zur Beendigung der Meßzeit der Meßstrahlung (5) in Abhängigkeit vom Empfangs zeitpunkt einer vorgebbaren empfangenen Strahlungsenergie der Referenzstrahlung (6) und eine Einrichtung (38), zur Integration des Meßsignals der Meßstrahlung (5) am Meßdetektor (8) über die Meßzeit zur Bestimmung des Meßergebnisses vorgesehen sind.

17. System nach Anspruch 16, dadurch gekennzeichnet, daß nach selektiver Verstärkung (13) die Referenzsignale (18, 19) zwei Proportional-Integral-Regler (22, 23) steuern, deren Sollwerte über zwei Potentiometer (26, 27) eingestellt werden und deren Ausgangssignale (35, 35a) die Energieversorgungen der Strahlungsquellen über zwei Schalter (3, 4) steuern.

18. System nach einem der Ansprüche 16 oder 17, dadurch gekennzeichnet, daß das Meßsignal (20) der Referenzstrahlung am Meßdetektor (8, 86, 81) nach selektiver Verstärkung (13) über ein Sample/Hold-Speicherglied (20) und einen Spannungs-Frequenz-Wandler (24) so lange auf einen ersten Zähler (36) gegeben wird, bis der Zähler (36) seinen Endwert erreicht hat und das das Meßsignal (21) der Meßstrahlung am Meßdetektor (8, 86, 81) nach selektiver Verstärkung (13) über ein Sample/Hold-Speicherglied (21) simultan, d.h. im identischen Zeitintervall, auf einen zweiten Spannungs-Frequenz-Wandler (25) und anschließend auf einen zweiten Zähler (38) gegeben wird und daß der am Ende des Zeitintervalls erreichte Wert (39) des zweiten Zählers (38) als Meßwerts herangezogen wird.

19. System nach Anspruch 18, dadurch gekennzeichnet, daß der Endwert des ersten Zählers (36) in Schritten von 2ⁿ, wobei n eine natürliche Zahl darstellt, einstellbar ist.

20. System nach Anspruch 18 oder 19, dadurch gekennzeichnet, daß daß Meßergebnis (39) über eine in einem EPROM-Speicher (40) abgelegte doppelseitige Tabelle dem jeweiligen Konzentrationswert der Molekülverbindung zugeordnet wird und daß die eine Spalte der Tabelle ausgewählte Meßwerte und die andere Spalte die zugeordneten Konzentrationswerte enthält.

21. System nach einem der Ansprüche 16 bis 20, dadurch gekennzeichnet, daß die Meßsignale der vier Teilstrahlen (80a, b, c, d) über zwei Gleichspannungsverstärker (9, 10) und zwei Schalter (11, 12) ein selektives Verstärkersystem (13) durchlaufen, welches aus einem Wechselspannungsverstärker (48) mit nachgeschaltetem Bandpass (49) und nachgeschaltetem Phasenschieber (51) sowie einem getakteten Gleichrichter (54) und einem Tiefpass (55) besteht.

22. System nach Anspruch 21, dadurch gekennzeichnet, daß die Mittenfrequenz des Bandpasses (49) über ein Potentiometer (50), die Phasenverschiebung des Phasenschiebers (51) über ein weiteres Potentiometer (52) eingestellt werden, wobei die Mittenfrequenz des Bandpasses (49) des selektiven Verstärkersystems (13) mit der Modulationsfrequenz (70a) der Strahlungsquellen (1, 2, 83, τ1, τ2) identisch ist, und daß der Gleichrichter (54) über den Schalter (53) getaktet wird.

23. System nach einem der Ansprüche 16 bis 22, dadurch gekennzeichnet, daß die Steuerung des Gesamtsystems über einen Taktgeber (29) erfolgt, dem ein Teiler (30) nachgeschaltet ist, welcher Proportional-Integral-Regler (22, 23) ansteuert und über einen weiteren Teiler (31) einen Decodierer (28) zur Synchronisation der Schalter (3, 4, 11, 12, 14, 15, 16, 17, 53) betätigt.

24. System nach einem der Ansprüche 16 bis 23, dadurch gekennzeichnet, daß der Zählvorgang des Meßwertzählers (38) über ein UND-Glied (37) vom Referenzwertzähler (36) gesteuert wird.

25. System nach einem der Ansprüche 20 bis 24, dadurch gekennzeichnet, daß die in einem EPROM-Speicher (40) abgelegten doppelspaltigen Tabellen zur Zuordnung von Meßwerten und Konzentrationswerten für verschiedene Molekülverbindungen über einen Mehrfachschalter (40a) angewählt werden können.

26. System nach einem der Ansprüche 16 bis 25, dadurch gekennzeichnet, daß ein Referenzwertzähler (36) über eine Steuerung (47) LCD-Treiber (41, 42, 43) zur Ausgabe der Ergebniswerte (40b) an sieben-Segment-Anzeigen (44, 45, 46) initialisiert.

27. System nach einem der Ansprüche 16 bis 26, dadurch gekennzeichnet, daß neben Durchflußzellen (76) auswechselbare Zellen (85), die mit der jeweiligen Probe gefüllt werden, einsetzbar sind.

28. System nach einem der Ansprüche 16 bis 27, dadurch gekennzeichnet, daß beim Einbringen der Zelle (85) in den Untersuchungsschacht (88) die Inbetriebnahme des Gesamtsystems über einen Schalter (89), welcher einen Schaltkontakt (89a) aufweist, erfolgt und daß bei Herausnahme der Zelle (85) mit der Probe (84) aus dem Untersuchungsschacht (88) die Energieversorgung des Gesamtsystems außer Betrieb genommen wird.

29. System nach einem der Ansprüche 16 bis 28, dadurch gekennzeichnet, daß die hochfrequente Modulation der Strahlungsquellen (1, 2) durch Ein- und Ausschalten von Schaltern (3, 4), welche von einem Taktgeber (29) mit einem Teiler (30) gesteuert werden, und daß die im Vergleich niederfrequente Meßwerterfassung über Schalter (14, 15, 16, 17), welche über einen zusätzlichen Teiler (31) angesteuert werden, erfolgt.

30. System nach einem der Ansprüche 16 bis 29, dadurch gekennzeichnet, daß als Strahlungsquellen (83) eine monolithisch aufgebaute Doppel-Leuchtdiode mit zwei verschiedenen Emissionswellenlängen eingesetzt wird.

31. System nach einem der Ansprüche 16 bis 30, dadurch gekennzeichnet, daß als Strahlungsquellen stromdurchflossene Metalldrähte (93, 99) mit Durchmessern im Mikrometer-Bereich eingesetzt werden und daß die Energieversorgung durch getaktete Spannungsquellen oder getaktete Stromquellen (98, 103) erfolgt.

32. System nach einem der Ansprüche 16 bis 31, dadurch gekennzeichnet, daß die Strahlungsquellen (93, 99) optisch transparente Fenster (95, 101, 114) aufweisen, die mit optischen Interferenzfiltern (97, 102) beschichtet sind.

33. System nach einem der Ansprüche 16 bis 32, dadurch gekennzeichnet, daß als Strahlungsquellen (105) lamellenförmige Strukturen (106) eingesetzt werden, deren Struktur-Dimensionen (107, 108, 109) im Mikrometer-Bereich bzw. im sub-Mikrometer-Bereich liegen und deren Strukturlänge (110) sich vom Millimeter- bis Centimeter-Bereich erstreckt.

34. System nach einem der Ansprüche 16 bis 33, dadurch gekennzeichnet, daß die elektrischen Anschlüsse zur Taktung der Strahlungsquellen an den Stirnflächen (111, 112) angebracht sind und leistenförmig ausgebildet sind.

35. System nach einem der Ansprüche 16 bis 34, dadurch gekennzeichnet, daß die Strahlungsquellen (93, 99) sich im Brennpunkt eines Parabolspiegels (94, 100) befinden und daß die Parabolspiegel innen mit Gold beschichtet sind.

36. System nach einem der Ansprüche 16 bis 35, dadurch gekennzeichnet, daß eine Parallelisierung oder Fokussierung der Strahlung durch einen Reflektor (113) mit parabelförmigem Querschnitt erfolgt, wobei der Reflektor mit einem optischen Fenster (114) abgeschlossen ist.

37. System nach Anspruch 33, dadurch gekennzeichnet, daß die lamellenförmigen Strukturen (106) unter Einsatz der Röntgen Tiefenlithografie hergestellt sind und daß die Strukturen aus Nickel bestehen.

38. System nach einem der Ansprüche 16 bis 37, dadurch gekennzeichnet, daß die Strahlungsquellen (96, 106, 113) vakuumdicht abgeschlossen sind und mit einem Edelgas bei Unterdruck geflutet sind.

39. System nach Anspruch 33 oder 37, dadurch gekennzeichnet, daß die lamellenförmige Strahlerstruktur als ebener Strahler ausgebildet ist mit Flächen-Abmessungen im Quadratmillimeter-Bereich und daß die Strahlung mit einer Linse paraflelisiert bzw. fokussierbar ist.

## Claims

1. Method for optical transmission measurement, particularly with regards to the concentration determination of optically absorbing molecular compounds in gases and liquids and films, the radiation being used in the ultraviolet, visible, near infrared and infrared range and the liquid and/or the gas flow through or are contained in an optical cell (76), at least two electronically timed radiation sources (1, 2) of different emission wavelength ranges (5, 6) in each case producing two partial beams, one partial beam pair of different wavelengths timed in phase-shifted manner passes through the optical cell and meets a first detector (8), the measuring detector, whilst the other partial beam pair of different wavelength timed in phase-shifted manner, bypassing the cell (76), meets a second detector, the reference detector (7), the wavelength range emitted by the radiation source (1), the so-called measuring beam (5), being absorbed by the molecular compound to be determined, whereas the wavelength range emitted by the other radiation source (2), the so-called reference beam (6), is not attenuated by the medium being investigated, the signals of the emission wavelength range (5, 6) detected at the reference detector (7) regulates the radiation intensity of the associated radiation source (1, 2) to a constant value, the measuring signal of the reference beam (6) being integrated at the measuring detector (8) over a measuring time until a fixed predeterminable value of the integral is reached and the measuring signal of the measuring beam (5) at the measuring detector (8) is integrated over the same measurement time and that the integral of the measured value of the measuring beam (5) at the measuring detector (8) reached at the end of this measuring time is used as the measurement result.

2. Method according to claim 1, characterized in that the measurement result is associated by means of at least one double-column table filed in a non-volatile memory (40) with the particular concentration value of the molecular compound and that one column of the table contains selected measurement values and the other column the associated concentration values.

3. Method according to claim 2, characterized in that several double-column tables, which are associated with different molecular compounds, are filed in non-volatile memories.

4. Method according to claim 2 or 3, characterized in that the particular measured value is associated with the nearest table value.

5. Method according to one of the preceding claims, characterized in that the measuring signals of the four partial beams at the measuring detector (8) and at the reference detector (7) timed in phase-shifted manner pass through a single selective amplifier system (13) and that the signals of the reference detector (7) are supplied directly to the regulating systems (22, 23) of the radiation sources (1, 2) and the signals of the measurement detector (8) directly to the integrator (38) of the measuring signal (5) of the measurement detector (8) or directly to the integrator (36) of the reference signal (6) of the measurement detector (8).

6. Method according to one of the preceding claims, characterized in that the measurement signals of the partial beams, particularly after passing through the selective amplifier system (13), are buffer stored.

7. Method according to one of the claims 2 to 6, characterized in that the radiation pulses of the measuring beam (5) and the radiation pulses of the reference beam (6) are subdivided into in each case two partial intervals, the regulating intervals (62, 63) and the measurement intervals (64, 65) and that one partial interval (62, 63) is used for regulating the radiation sources (1, 2) and the other partial interval (64, 65) for determining the measurement signals of the reference beam (6) and the measurement signals of the measuring beam (5).

8. Method according to one of the preceding claims, characterized in that regulating and measuring intervals (62 to 64) are in each case subdivided into two further partial intervals (66, 67; 66, 68; 66, 69; 66, 70), the first partial interval (66) being used for performing the transient process and the second partial intervals (67 to 70) for performing the regulating or measuring process.

9. Method according to one of the preceding claims, characterized in that the radiation pulses both of the measuring beam (5) and the reference beam (6) are modulated in high frequency manner during the radiation phases and the timing of the radiation sources (1, 2) from the radiating to the non-radiating state takes place in a comparatively low frequency manner.

10. Method according to claim 9, characterized in that the modulation of the radiation pulses takes place by high frequency switching on and off of the radiation sources (1, 2) during the radiation phases.

11. Method according to claim 9 or 10, characterized in that the centre frequency of the selective amplifier system (13) coincides with the modulation frequency of the radiation sources (1, 2).

12. Method according to one of the preceding claims, characterized in that a mobile cell (76) is used and after introduction into the optical path brings about an automatic putting into operation of the system and after removal triggers the automatic disconnection of the power supply.

13. Method according to one of the preceding claims, characterized in that as the radiation source use is made of fan-like structures (106) made from electrically conductive material with a large surface, a small volume and extremely small material thickness.

14. Method according to claim 13, characterized in that the fan-like structures (106) are fine structures in the micrometre or submicrometre range.

15. Method according to one of the preceding claims, characterized in that the radiation emitted by the pulsed radiation sources (1, 2) is optically filtered.

16. System for optical transmission measurement, particularly with regards to the concentration determination of optically absorbing molecular compounds in gases, liquids and films, radiation in the ultraviolet, visible, near infrared and infrared range being used and the liquid and/or gas flow through or are contained in an optical cell (76), at least two electronically timed radiation sources (1, 2, 83, 99, 93) of different emission wavelength ranges (5, 6) in each case produce two partial beams, one partial beam pair (80a, 80b) of different wavelengths (τ1, τ2) passes through the cell (76) timed in phase-shifted manner and meets a first detector (8, 81, 86), the measuring detector, and the other partial beam pair (80c, 80d) of different wavelengths timed in phase-shifted manner meets a second detector (7, 80, 87), the reference detector, bypassing the cell (76, 84), the wavelength of the measuring beam (5) is relatively absorbable by molecular compounds of interest, whereas the wavelength of the reference beam (6) is outside the selective absorption range of the molecular compounds of interest, a device (22, 23) being provided for regulating the radiation intensity of the corresponding radiation source (1, 2) on the basis of the signals of the particular emission wave-length range detected at the reference detector (7, 80, 87), a device (36, 47) is provided for ending the measuring time of the measuring beam (5) as a function of the reception time of a predeterminable, received radiation energy of the reference beam (6) and a device (38) is provided for integrating the measuring signal of the measuring beam (5) at the measuring detector (8) over the measurement time for determining the measurement result.

17. System according to claim 16, characterized in that, following selective amplification (13), the reference signals (18, 19) control two proportional-integral controllers (22, 23), whose desired values are adjusted by means of two potentiometers (26, 27) and whose output signals (35, 35a) control the power supplies of the radiation sources by means of two switches (3, 4).

18. System according to one of the claims 16 or 17, characterized in that the measurement signals (20) of the reference beam at the measurement detector (8, 86, 81) following selective amplification (13) is supplied across a sample and hold storage element (20) and a voltage-frequency converter (24) to a first counter (36) until the latter has reached its final value and the measurement signal (21) of the measuring beam at the measurement detector (8, 86, 81), following selective amplification (13), is supplied across a sample and hold storage element (21) simultaneously, i.e. in the identical time interval, to a second voltage-frequency converter (25) and then to a second counter (38) and the value (39) of the second counter (38) reached at the end of the time interval is used as the measurement value.

19. System according to claim 18, characterized in that the final value of the first counter (36) is adjustable in steps of 2ⁿ, n being a natural number.

20. System according to claim 18 or 19, characterized in that the measurement result (39) is associated by means of a double-sided table filed in an EPROM (40) with the particular concentration value of the molecular compound and that one column of the table contains selected measurement values and the other column the associated concentration values.

21. System according to one of the claims 16 to 20, characterized in that the measurement signals of the four partial beams (80a, b, c, d) pass across two d.c. voltage amplifiers (9, 10) and two switches (11, 12) through a selective amplifier system (13), which comprises an a.c. voltage amplifier (48) with downstream band-pass filter (49) and down-stream phase shifter (51), as well as a timed rectifier (54) and a low-pass filter (55).

22. System according to claim 21, characterized in that the centre frequency of the band-pass filter (49) is adjusted by means of a potentiometer (50) and the phase shift of the phase shifter (51) by means of a further potentiometer (52), the centre frequency of the band-pass filter (49) of the selective amplifier system (13) being identical to the modulation frequency (70a) of the radiation sources (1, 2, 83, τ1, τ2) and that the rectifier (54) is timed by means of the switch (53).

23. System according to one of the claims 16 to 22, characterized in that the overall system is controlled by means of a clock (29), which is followed by a divider (30), which controls proportional-integral controllers (22, 23) and by means of a further divider (31) operates a decoder (28) for synchronizing the switches (3, 4, 11, 12, 14, 15, 16, 17, 53).

24. System according to one of the claims 16 to 23, characterized in that the counting process of the measured value counter (38) is controlled from the reference value counter (36) by means of an AND element (37).

25. System according to one of the claims 20 to 24, characterized in that the double-column tables filed in an EPROM (40) can be selected by means of a gang switch (40a) for associating measured values and concentration values for different molecular compounds.

26. System according to one of the claims 16 to 25, characterized in that a reference value counter (36) is initialized by means of a control (47) LCD driver (41, 42, 43) for outputting the result values (40b) on seven-segment displays (44, 45, 46).

27. System according to one of the claims 16 to 26, characterized in that besides flow-through cells (76) use can be made of interchangeable cells (85) which are filled with the particular sample.

28. System according to one of the claims 16 to 27, characterized in that on introducing the cell (85) into the inspection shaft (18), the overall system is put into operation by means of a switch (89), which has a switching contact (89a) and that on removing the cell (85) with the sample (84) from the inspection shaft (88), the power supply of the overall system is put out of operation.

29. System according to one of the claims 16 to 28, characterized in that the high frequency modulation of the radiation sources (1, 2) takes place by switching on and off switches (3, 4) controlled by a clock (29) with a divider (30) and that the comparatively low frequency measured value determination takes place by means of switches (14, 15, 16, 17) controlled by means of an additional divider (31).

30. System according to one of the claims 16 to 29, characterized in that the radiation sources (83) are constituted by a monolithically constructed double light-emitting diode with two different emission wavelengths.

31. System according to one of the claims 16 to 30, characterized in that the radiation sources are constituted by metal wires (93, 99) through which a current flows and having diameters in the micrometre range and that the power supply takes place by timed voltage sources or timed current sources (98, 103).

32. System according to one of the claims 16 to 31, characterized in that the radiation sources (93, 99) have optically transparent windows (95, 101, 114), which are coated with optical interference filters (97, 102).

33. System according to one of the claims 16 to 32, characterized in that lamellar structures (106) are used as radiation sources (105) and their structural dimensions (107, 108, 109) are in the micrometre or submicrometre range and their structural length (110) is in the millimetre to centimetre range.

34. System according to one of the claims 16 to 33, characterized in that the electrical connections for timing the radiation sources are fitted to the faces (111, 112) and are constructed in strip-like manner.

35. System according to one of the claims 16 to 34, characterized in that the radiation sources (93, 99) are located in the focus of a parabolic mirror (94, 100), the parabolic mirror internally being coated with gold.

36. System according to one of the claims 16 to 35, characterized in that there is a parallelizing or focusing of the raadiation by a reflector (113) having a parabolic cross-section, the reflector being terminated by an optical window (114).

37. System according to claim 33, characterized in that the lamellar structures (106) are produced by deep radiolithography and the structures are made from nickel.

38. System according to one of the claims 16 to 37, characterized in that the radiation sources (96, 106, 113) are terminated in vacuum-tight manner and are flooded with an inert gas under vacuum.

39. System according to claim 33 or 37, characterized in that the lamellar radiator structure is constructed as a planar radiator with surface dimensions in the mm² range and that the radiation is parallelized or focusable with a lens.

## Revendications

1. Procédé pour mesurer la transmission optique, notamment en vue de déterminer la concentration en liaisons moléculaires absorbantes optiques dans les gaz, les liquides et les feuilles minces selon lequel un rayonnement dans le domaine des ultraviolets, du visible, du proche-infrarouge ou de l'infrarouge est mis en oeuvre et selon lequel le liquide et/ou le gaz s'écoule(nt) à travers une cellule optique (76) ou sont contenus dans la cellule, procédé selon lequel au moins deux sources électroniques cadencées de rayonnement (1,2) de plages de longueurs d'onde différentes d'émission (5,6) fournissant chacune deux faisceaux partiels, dans lequel la première paire de faisceaux partiels de longueurs d'onde différentes traverse la cellule optique cadencée en décalage de phase et atteint un premier détecteur (8), le détecteur de mesure, dans lequel la deuxième paire de faisceaux partiels de longueurs d'onde différentes atteint cadencé en décalage de phase, après avoir contourné la cellule (76), un deuxième détecteur, le détecteur de comparaison (7), procédé dans lequel la plage de longueurs d'onde émise par l'une (1) des sources de rayonnement, dit rayonnement de mesure (5) est absorbée par la liaison moléculaire à déterminer, tandis que la plage de longueurs d'onde émise par l'autre source de rayonnement (2), dit rayonnement de référence (6), n'est pas atténuée par le milieu à analyser, dans lequel les signaux détectés au niveau du détecteur de comparaison (7) sur chaque plage de longueurs d'onde d'émission (5,6) régule l'intensité de rayonnement de la source de rayonnement (1,2) correspondante à une valeur constante, dans lequel le signal de mesure du rayonnement de référence (6) est intégré au niveau du détecteur de mesure (8) sur une durée de mesure telle qu'elle permette d'atteindre une valeur constante et prédéterminée de l'intégrale, dans lequel le signal de mesure du rayonnement de mesure (5) est intégré au niveau du détecteur de mesure (8) sur la même durée, et dans lequel l'intégrale des valeurs de mesure du rayonnement de mesure (5) au niveau du détecteur de mesure (8) atteinte à l'expiration de ce temps est fournie comme résultat de mesure.

2. Procédé selon la revendication 1, caractérisé en ce que le résultat de mesure est associé à la valeur de la concentration de la liaison moléculaire correspondante par l'intermédiaire d'un tableau à deux colonnes disposé dans une mémoire non volatile, et en ce qu'une colonne du tableau contient des valeurs de mesure sélectionnées et l'autre colonne les valeurs de concentration associées.

3. Procédé selon la revendication 2, caractérisé en ce que plusieurs tableaux à deux colonnes, associés à des liaisons moléculaires différentes, sont disposés dans la mémoire non volatile.

4. Procédé selon l'une quelconque des revendications 2 ou 3, caractérisé en ce que chaque valeur de mesure est associée à la valeur du tableau la plus proche.

5. Procédé selon l'une quelconque des revendications précédentes, caractérisé en ce que les signaux de mesure des quatre faisceaux partiels, au niveau du détecteur de mesure (8) et du détecteur de comparaison (7), traversent de manière cadencée en décalage de phase un dispositif d'amplification sélective (13) unique, et en ce que les signaux du détecteur de comparaison (7) sont directement conduits aux dispositifs de régulation (22,23) des sources de rayonnement (1,2) et les signaux du détecteur de mesure (8) sont conduits, soit directement à l'intégrateur (38) du signal de mesure (5) du détecteur de mesure (8), soit directement à l'intégrateur (36) du signal de référence (6) du détecteur de mesure (8).

6. Procédé selon l'une quelconque des revendications précédentes, caractérisé en ce que les signaux de mesure des faisceaux partiels sont mémorisés provisoirement, en particulier après avoir traversé le dispositif d'amplification sélective (13).

7. Procédé selon l'une quelconque des revendications 2 à 6, caractérisé en ce que les impulsions de rayonnement du rayonnement de mesure (5) et les impulsions de rayonnement du rayonnement de référence (6) sont chacune divisées en deux intervalles partiels, les intervalles de régulation (62,63) et les intervalles de mesure (64,65), et en ce que le premier intervalle partiel (62,63) est utilisé pour la régulation des sources de rayonnement (1,2) et l'autre intervalle partiel (64,65) est utilisé pour la détection des signaux de mesure du rayonnement de référence (6) et des signaux de mesure du rayonnement de mesure (5).

8. Procédé selon l'une quelconque des revendications précédentes, caractérisé en ce que les intervalles de régulation et de mesure (62-64) sont eux-mêmes divisés chacun en deux intervalles partiels (66,67 ; 66,68 ; 66,69 ; 66,70), le premier intervalle partiel (66) étant utilisé pour traiter les phénomènes transitoires et le deuxième intervalle partiel (67-70) pour l'exécution de la régulation ou de la mesure.

9. Procédé selon l'une quelconque des revendications précédentes, caractérisé en ce que les impulsions de rayonnement du faisceau de mesure (5) aussi bien que du faisceau de référence (6) sont modulées à haute fréquence pendant les phases de rayonnement, et le cadencement des sources de rayonnement (1,2) de l'état intermédiaire de rayonnement à celui de non-rayonnement est effectué à une fréquence comparativement basse.

10. Procédé selon la revendication 9, caractérisé en ce que la modulation des impulsions de rayonnement est effectuée en commutant de l'état allumé à l'état éteint à haute fréquence les sources de rayonnement (1,2) pendant les phases de rayonnement.

11. Procédé selon l'une quelconque des revendications 9 ou 10, caractérisé en ce que la fréquence centrale du dispositif d'amplification sélective (13) correspond à la fréquence de modulation des sources de rayonnement (1,2).

12. Procédé selon l'une quelconque des revendications précédentes, caractérisé en ce qu'on met en oeuvre une cellule mobile (cuvette 76) qui, lorsqu'elle est disposée dans le passage des faisceaux, déclenche une mise en fonctionnement automatique du dispositif, et lorsqu'elle est enlevée, provoque l'arrêt automatique de l'alimentation en énergie.

13. Procédé selon l'une quelconque des revendications précédentes, caractérisé en ce qu'on utilise pour la source de rayonnement des structures en éventail (106) en matériau électriquement conducteur présentant simultanément une grande surface supérieure, un petit volume et une épaisseur de matériau extrêmement réduite.

14. Procédé selon la revendication 13, caractérisé en ce que les structures en éventail (106) présentent des structures fines dans la gamme du micromètre ou en dessous.

15. Procédé selon l'une quelconque des revendications précédentes, caractérisé en ce que le rayonnement émis par les sources de rayonnement (1,2) pulsées subit un filtrage optique.

16. Dispositif pour mesurer la transmission optique, notamment en vue de déterminer la concentration en liaisons moléculaires absorbantes optiques dans les gaz, les liquides et les feuilles minces, dans lequel un rayonnement dans le domaine des ultraviolets, du visible, du proche-infrarouge ou de l'infrarouge est mis en oeuvre, dans lequel le liquide et/ou le gaz s'écoulent à travers une cellule optique (76) ou sont contenus dans la cellule, dans lequel au moins deux sources de rayonnement (1,2,83,99,93) cadencées de domaines de longueurs d'onde d'émission (5,6) différents fournissent chacune deux faisceaux partiels, la première paire de faisceaux partiels (80a,80b) de longueurs d'onde (τ*1*,τ*2*) différentes traversant la cellule optique (76) de manière cadencée avec un décalage de phase, et atteignant un premier détecteur (8,81,86), le détecteur de mesure, et la deuxième paire de faisceaux partiels (80c,80d) de longueurs d'onde différentes atteignant de manière cadencée en décalage de phase, après avoir contourné la cellule (76,84) un deuxième détecteur (7,80,87), le détecteur de comparaison, dans lequel la longueur d'onde du rayonnement de mesure (5) est absorbée en fonction de liaisons moléculaires intéressantes, tandis que la longueur d'onde du faisceau de référence sélectif (6) se trouve en-dehors de tout domaine d'absorption des liaisons moléculaires intéressantes, dans lequel un dispositif (22,23) est prévu pour réguler l'intensité de rayonnement des sources de rayonnement (1,2) correspondantes en fonction des signaux de chaque domaine de longueurs d'onde d'émission détectés au niveau du détecteur de comparaison (7) (7,80,87), ainsi qu'un dispositif (36,47) pour arrêter le temps de mesure du rayonnement de mesure (5) en fonction de l'instant de réception d'une énergie prédéterminée de rayonnement reçue du rayonnement de référence (6), et un dispositif (38) pour intégrer le signal de mesure du rayonnement de mesure (5) au niveau du détecteur de mesure (8) sur la durée de mesure, de façon à définir un résultat de mesure.

17. Dispositif selon la revendication 16, caractérisé en ce que les signaux de référence (18,19) commandent après amplification sélective (13) deux régulateurs proportionnels et intégraux (22,23) dont les valeurs de référence sont réglées par l'intermédiaire de deux potentiomètres (26,27) et dont les signaux de sortie (35,35a) commandent l'alimentation en énergie des sources de rayonnement par l'intermédiaire de deux interrupteurs (3,4).

18. Dispositif selon l'une quelconque des revendications 16 ou 17, caractérisé en ce que le signal de mesure (20) du rayonnement de référence au niveau du détecteur de mesure (8,86,81) après amplification sélective (13) par l'intermédiaire d'un élément mémoire échantillonneur-bloqueur (20) et un convertisseur tension-fréquence (24) est fourni à un premier compteur (36) suffisamment longtemps pour que le compteur (36) atteigne sa valeur finale, et le signal de mesure (21) du rayonnement de mesure au niveau du détecteur de mesure (8,86,81) après amplification sélective (13) par l'intermédiaire d'un élément mémoire échantillonneur-bloqueur (21) est fourni simultanément, c'est-à-dire dans un intervalle de temps identique, à un deuxième convertisseur tension-fréquence (25) puis à un deuxième compteur (38), et en ce que la valeur (39) du deuxième compteur (38) atteinte à la fin de l'intervalle de temps est fournie comme valeur de mesure.

19. Dispositif selon la revendication 18, caractérisé en ce que la valeur finale du premier compteur (36) est réglable par pas de 2ⁿ, n étant un nombre naturel.

20. Dispositif selon l'une quelconque des revendications 18 ou 19, caractérisé en ce que le résultat de mesure (39) est associé à la valeur de concentration de la liaison moléculaire correspondante par l'intermédiaire d'un tableau à deux colonnes disposé dans une mémoire EPROM (40), et en ce qu'une colonne du tableau contient des valeurs sélectionnées et l'autre partie les valeurs de concentration associées.

21. Dispositif selon l'une quelconque des revendications 16 à 20, caractérisé en ce que les signaux de mesure des quatre faisceaux partiels (80a,b,c,d) traversent par l'intermédiaire de deux amplificateurs à tension constante (9,10) et deux interrupteurs (11,12) un dispositif d'amplification sélective (13), ce dispositif (13) consistant en un amplificateur de tension alternative (48) auquel sont connectés un passe-bande (49) et un décaleur de phase (51), ainsi qu'un redresseur de courant (54) cadencé et un passe-bas (55).

22. Dispositif selon la revendication 21, caractérisé en ce qu'on règle la fréquence centrale du passe-bande (49) par l'intermédiaire d'un potentiomètre (50), le décalage de phase du décaleur de phase (51) par un autre potentiomètre (52), la fréquence centrale du passe-bande (49) du dispositif d'amplification sélective (13) étant identique à la fréquence de modulation (70a) des sources de rayonnement (1,2,83,τ*1*,τ*2*), et en ce que le redresseur de courant (54) est cadencé par l'intermédiaire de l'interrupteur (53).

23. Dispositif selon l'une quelconque des revendications 16 à 22, caractérisé en ce que la commande de l'ensemble du dispositif est effectuée par l'intermédiaire d'une horloge interne (29) à laquelle est connecté un diviseur (30), qui commande les régulateurs proportionnels et intégraux (22,23) et, par l'intermédiaire d'un autre diviseur (31), un décodeur (28) pour la synchronisation des interrupteurs (3,4,11,12,14,15,16,17,53).

24. Dispositif selon l'une quelconque des revendications 16 à 23, caractérisé en ce que l'action de comptage du compteur de valeur de mesure (38) est commandée par le compteur de valeur de référence (36) par l'intermédiaire d'un élément ET (37).

25. Dispositif selon l'une quelconque des revendications 20 à 24, caractérisé en ce que les tableaux à deux colonnes pour l'association de valeurs de mesure et de valeurs de concentration pour différentes liaisons moléculaires disposés dans une mémoire EPROM (40), peuvent être choisis grâce à un interrupteur à plusieurs positions (40a).

26. Dispositif selon l'une quelconque des revendications 16 à 25, caractérisé en ce qu'un compteur de valeur de référence (36) initialise par l'intermédiaire d'une commande (47) des circuits LCD (41,42,43) pour l'obtention des valeurs de résultat (40b) sur des éléments d'affichage à sept segments.

27. Dispositif selon l'une quelconque des revendications 16 à 26, caractérisé en ce que l'on peut mettre en oeuvre, outre des cellules de passage (76), des cellules échangeables (85) que l'on remplit avec chaque échantillon.

28. Dispositif selon l'une quelconque des revendications 16 à 27, caractérisé en ce que, lorsque l'on introduit la cellule (85) dans le boîtier d'examen (88), la mise en fonctionnement de l'ensemble du dispositif est déclenchée par l'intermédiaire d'un interrupteur (89) présentant un contact d'interruption (89a), et en ce que, lorsqu'on sort la cellule (85) avec l'échantillon (84) du boîtier d'examen (88), l'alimentation en énergie de l'ensemble du dispositif est arrêtée.

29. Dispositif selon l'une quelconque des revendications 16 à 28, caractérisé en ce que la modulation à haute fréquence des sources de rayonnement (1,2) est réalisée par fermeture et ouverture d'interrupteurs (3,4) commandés par une horloge interne (29) avec un diviseur (30), et en ce que la détection de la valeur de mesure à une fréquence comparativement basse est réalisée par l'intermédiaire d'interrupteurs (14,15,16,17) commandés par un diviseur (31) supplémentaire.

30. Dispositif selon l'une quelconque des revendications 16 à 29, caractérisé en ce que l'on met en oeuvre comme source de rayonnement (83) une diode à double luminescence de construction monolithique présentant deux longueurs d'onde d'émission différentes.

31. Dispositif selon l'une quelconque des revendications 16 à 30, caractérisé en ce que l'on met en oeuvre comme source de rayonnement des fils métalliques traversés par du courant présentant un diamètre de l'ordre du micromètre et en ce que l'alimentation en énergie est réalisée par une source de tension cadencée ou une source de courant cadencée (98,103).

32. Dispositif selon l'une quelconque des revendications 16 à 31, caractérisé en ce que les sources de rayonnement (93,99) présentent des fenêtres optiques transparentes (95,101,114), recouvertes de filtres d'interférences optiques (97,102).

33. Dispositif selon l'une quelconque des revendications 16 à 32, caractérisé en ce que l'on utilise comme source de rayonnement (105) des structures (106) en forme de lamelles, dont les dimensions structurales (107,108,109) sont de l'ordre, soit du micromètre, soit encore inférieures, et dont la longueur structurale (110) s'étend dans la gamme du millimètre au centimètre.

34. Dispositif selon l'une quelconque des revendications 16 à 33, caractérisé en ce que les connexions électriques pour le cadençage des sources de rayonnement sont disposées sur les surfaces frontales (111,112) et sont conformées en bandes.

35. Dispositif selon l'une quelconque des revendications 16 à 34, caractérisé en ce que les sources de rayonnement (93,99) se trouvent au foyer d'un miroir parabolique (94,100) et en ce que le miroir parabolique est recouvert intérieurement d'or.

36. Dispositif selon l'une quelconque des revendications 16 à 35, caractérisé en ce que l'opération de rendre parallèle ou la focalisation du rayonnement est réalisée par l'intermédiaire d'un réflecteur (113) de section en forme de parabole, ce réflecteur étant fermé par une fenêtre optique.

37. Dispositif selon la revendication 33, caractérisé en ce que les structures (106) en forme de lamelles sont fabriquées par la mise en oeuvre d'une lithographie profonde aux rayons X, et en ce que les structures sont faites en nickel.

38. Dispositif selon l'une quelconque des revendications 16 à 37, caractérisé en ce que les sources de rayonnement (96,106,113) sont fermées et étanches au vide, et sont remplies d'un gaz noble par dépression.

39. Dispositif selon l'une quelconque des revendications 33 ou 37, caractérisé en ce que les structures rayonnantes en forme de lamelles sont conformées en émetteur plan avec des dimensions de surface de l'ordre du millimètre carré, et en ce que le rayonnement peut être rendu parallèle et focalisé par une lentille.
